# EUROPÄISCHE PATENTSCHRIFT

(11) **EP 3 581 023 B1**
(45) Veröffentlichungstag und Bekanntmachung des Hinweises auf die Patenterteilung: **17.03.2021**
(21) Anmeldenummer: 19177813.3
(22) Anmeldetag: 03.06.2019
(51) Int. Cl.: A01G 20/47, A47L 9/32, E01H 1/08, A47L 5/14

(54) **BLASGERÄT**
BLOWER
SOUFFLEUR

(30) Priorität: 12.06.2018 DE 102018004680
(43) Veröffentlichungstag der Anmeldung: 18.12.2019
(73) Patentinhaber: Andreas Stihl AG & Co. KG, 71336 Waiblingen (DE)
(72) Erfinder: Kuschewski, Mario, 71263 Weil der Stadt (DE); Jug, Simon, 73547 Lorch (DE)
(74) Vertreter: Reinhardt, Annette

(56) Entgegenhaltungen:
- EP-A1- 2 803 260
- DE-U1- 29 620 006
- US-A- 5 535 479
- US-A1- 2012 131 762

## Beschreibung

Die Erfindung betrifft ein Blasgerät nach dem Oberbegriff des Anspruchs 1.

Aus der EP 2 803 260 B1 ist ein Saug-/Blasgerät mit einem verschwenkbaren Handgriff bekannt. Je nach Verwendung des Saug-/Blasgeräts als Sauggerät oder als Blasgerät wird der Handgriff in zwei verschiedene Stellungen geschwenkt.

Der Erfindung liegt die Aufgabe zugrunde, ein gattungsgemäßes Blasgerät derart weiterzubilden, dass ein ergonomisches Arbeiten möglich ist.

Diese Aufgabe wird durch ein Blasgerät mit den Merkmalen des Anspruchs 1 gelöst.

Die Erfindung sieht vor, dass der Griffbereich in der ersten Position im Vergleich zur zweiten Position unterschiedlich gegen die Ausblasrichtung geneigt ist. Dadurch kann das Blasgerät in zwei verschiedenen Arbeitsmodi verwendet werden und die Griffstellung jeweils an den jeweiligen Arbeitsmodus angepasst sein.

Ein Großteil der vom Blasgerät auf den Bediener übertragenen Kraft wirkt entgegen der Ausblasrichtung. Es hat sich gezeigt, dass für unterschiedliche Arbeitsmodi unterschiedliche Neigungen des Griffbereichs relativ zur Ausblasrichtung vorteilhaft sind. Durch die beiden Positionen des Griffbereichs ist es für den Bediener möglich, die Neigung des Griffbereichs an den Anwendungsfall angepasst zu wählen.

Vorteilhaft weist der Griffbereich eine gedachte Längsachse auf. Die Längsachse ist in der ersten Position in Richtung eines ersten Richtungsvektors und in der zweiten Position in Richtung eines zweiten Richtungswechsels orientiert. Der Luftstrom passiert die Ausblasöffnung in Richtung eines dritten Richtungsvektors. Der dritte Richtungsvektor zeigt in Richtung der Ausblasrichtung. Vorteilhaft sind ein erster Winkel, der vom dritten Richtungsvektor zum ersten Richtungsvektor gemessen ist, und ein zweiter Winkel, der vom dritten Richtungsvektor zum zweiten Richtungsvektor gemessen ist, unterschiedlich groß.

Vorteilhaft ist das Blasgerät wahlweise in einem Saugmodus oder in einem Blasmodus betreibbar. Für den Saugmodus ist die erste Position des Handgriffs vorgesehen, und für den Blasmodus ist die zweite Position des Handgriffs vorgesehen.

Zweckmäßig ist das Gebläse ein Radialgebläse.

In vorteilhafter Weiterbildung der Erfindung sind der erste Winkel und der zweite Winkel vom an der Ausblasöffnung angeordneten dritten Richtungsvektor ausgehend in Richtung des Griffbereichs gemessen, und der erste Winkel ist größer als der zweite Winkel.

Vorteilhaft ist die Differenz zwischen dem ersten Winkel und dem zweiten Winkel größer als 10°, insbesondere größer als 25°, besonders vorteilhaft größer als 90°, ganz besonders vorteilhaft größer als 125°. Dadurch ergibt sich in der ersten Position eine andere Übertragung von Kräften, die auch in Richtung der Ausblasrichtung wirken, auf den Griffbereich als in der zweiten Position. Dadurch kann die Kraftübertragung auf den Bediener an einen bestimmten Arbeitsmodus, beispielsweise an einen Saugmodus oder einen Blasmodus, angepasst sein.

Zweckmäßig ist die Differenz zwischen dem ersten Winkel und dem zweiten Winkel kleiner als 200°, insbesondere kleiner als 180°, besonders zweckmäßig kleiner als 150°.

Vorteilhaft ist der erste Winkel größer als 170° und kleiner als 220°. Dadurch kann die Längsachse des Griffbereichs annähernd parallel zur Ausblasrichtung verlaufen. Dadurch kann der Bediener im Saugmodus den Griffbereich so umgreifen, dass sein Unterarm annähernd orthogonal zur Ausblasrichtung orientiert ist. Bei Verwendung eines Radialgebläses kann der Unterarm dann annähernd parallel zu einer Ansaugrichtung des Gebläses orientiert sein. Dadurch ergibt sich im Saugmodus eine besonders ergonomische Führung des Blasgeräts.

Vorteilhaft ist der Griffbereich in der ersten Position zumindest teilweise von der Ausblasöffnung weg geneigt und in der zweiten Position zumindest teilweise in Richtung zur Ausblasöffhung hin geneigt. Vorteilhaft ist der am Handgriff angeordnete erste Richtungsvektor zumindest teilweise von der Ausblasöffnung weg geneigt und der am Handgriff angeordnete zweite Richtungsvektor zumindest teilweise in Richtung zur Ausblasöffhung hin geneigt. Dadurch kann das Blasgerät in der ersten Position des Griffbereichs - beispielsweise im Saugmodus - komfortabel in der Hand eines Bedieners hängend getragen werden. In der zweiten Position des Griffbereichs kann das Blasgerät - beispielsweise in einem Blasmodus eines Blasgeräts mit Radialgebläse - ergonomisch und komfortabel so vom Bediener getragen werden, dass der Bediener das Blasgerät am Griffbereich führen und dabei ein an der Ausblasöffhung angeordnetes Blasrohr auf den Boden richten kann, ohne sein Handgelenk zu überstrecken.

Zweckmäßig ist der Handgriff um eine Schwenkachse schwenkbar. Dadurch kann der Handgriff auf einfache Weise von einer Position in die andere verstellt werden.

Vorteilhaft ist der Handgriff in der zweiten Position im Vergleich zur ersten Position um 180° um die Schwenkachse verschwenkt. Dadurch ergibt sich ein einfacher Aufbau des Blasgeräts. Die Längsachse des Griffbereichs kann so beispielsweise sowohl in der ersten als auch in der zweiten Position in einer Ebene mit der Ausblasrichtung angeordnet sein. Dadurch ergibt sich eine günstige Kraftübertragung auf den Handgriff. Durch geeignete Anordnung der Schwenkachse sind sowohl für die erste Position als auch für die zweite Position ergonomische Anordnungen des Griffbereichs möglich.

In vorteilhafter Weiterbildung der Erfindung ist die Schwenkachse in Richtung eines vierten Richtungsvektors orientiert, wobei der vierte Richtungsvektor zumindest teilweise in Richtung von der Ausblasöffhung zum Handgriff zeigt. Vorteilhaft beträgt ein dritter Winkel zwischen dem dritten Richtungsvektor und dem vierten Richtungsvektor zwischen 90° und 180°, insbesondere vorteilhaft zwischen 100° und 130°, wobei der dritte Winkel ausgehend vom an der Ausblasöffnung angeordneten dritten Richtungsvektor in Richtung des Griffbereichs gemessen ist. Durch diese Schrägstellung der Schwenkachse in Bezug auf die Ausblasrichtung kann auf einfache Weise erreicht werden, dass der Griffbereich in der ersten Position im Vergleich zur zweiten Position unterschiedlich gegen die Ausblasrichtung geneigt ist. Hierzu ist die gedachte Längsachse des Griffbereichs vorteilhaft zumindest in der ersten Position oder in der zweiten Position schräg gegenüber der Schwenkachse orientiert.

In vorteilhafter Weiterbildung der Erfindung besitzt der Handgriff in Längsrichtung ein erstes Ende und ein zweites Ende. Im Bereich des ersten Endes ist ein Bedienelement zur Bedienung des Antriebsmotors angeordnet. In der ersten Position des Handgriffs zeigt das erste Ende von der Ausblasöffnung weg, und in der zweiten Position des Handgriffs zeigt das erste Ende zur Ausblasöffnung hin. Dadurch kann das Blasgerät so ausgelegt sein, dass sowohl im Saugmodus als auch im Blasmodus beim Umgreifen des Handgriffs mit einer Hand und gleichzeitigem Tragen des Blasgeräts über den Handgriff eine Bedienung des Bedienelements mit dem Zeigefinger möglich ist. Dies ermöglicht eine komfortable Bedienung des Blasgeräts. Bevorzugt verläuft die Schwenkachse durch den Griffbereich. In vorteilhafter Gestaltung schneidet die Schwenkachse den Griffbereich in einem zwischen dem ersten Ende und dem zweiten Ende des Griffbereichs liegenden Abschnitt des Griffbereichs.

Zweckmäßig ist das Bedienelement ortsfest an dem Handgriff angeordnet.

Zweckmäßig umfasst das Blasgerät einen zweiten Handgriff. Der zweite Handgriff und die Ausblasöffnung sind vorteilhaft auf gegenüberliegenden Seiten des Gebläses angeordnet. Dadurch kann das Blasgerät mit beiden Händen getragen werden. Insbesondere im Saugmodus kann das Blasgerät über den ersten Handgriff ergonomisch und zielsicher mit der einen Hand geführt werden und über den zweiten Handgriff, der im Saugmodus typischerweise am oberen Ende des Blasgeräts angeordnet ist, mit der anderen Hand gehalten werden. Auf diese Weise ist auch im Saugmodus eines Blasgeräts mit Radialgebläse ein Tragen des Blasgeräts möglich, bei dem das Blasgerät im Wesentlichen unter der anderen Hand des Bedieners hängt. Dadurch kann auf komfortable Weise die Gewichtskraft des Blasgeräts vom Bediener aufgenommen werden.

In vorteilhafter Weiterbildung der Erfindung passiert im Betrieb des Blasgeräts ein Luftstrom die Ansaugöffnung des als Radialgebläse ausgebildeten Gebläses in Richtung eines fünften Richtungsvektors. Ein vierter Winkel, der ausgehend vom an der Ansaugöffnung angeordneten fünften Richtungsvektor zum vierten Richtungsvektor in Richtung weg von der Ausblasöffnung gemessen ist, ist größer als 10°. Durch diese Schrägstellung der Schwenkachse in Bezug auf die Ansaugrichtung eines Radialgebläses kann das Blasgerät auf einfache Weise so ausgelegt sein, dass der Griffbereich der ersten Position im Vergleich zur zweiten Position unterschiedlich gegen die Ausblasrichtung geneigt ist. Hierzu ist die gedachte Längsachse des Griffbereichs vorteilhaft zumindest in der ersten Position oder in der zweiten Position schräg gegenüber der Schwenkachse orientiert.

Vorteilhaft beträgt ein fünfter Winkel, der in der ersten Position ausgehend von dem an deren Saugöffnung angeordneten fünften Richtungsvektor zum ersten Richtungsvektor in Richtung weg von der Ausblasöffnung gemessen ist, 80° bis 130°, insbesondere 80° bis 100°. Dadurch ist die Längsachse des Griffbereichs des Handgriffs in der ersten Position annähernd orthogonal zur Ansaugöffnung orientiert. Dadurch ergibt sich im Saugmodus eine ergonomische Haltung des Bedieners beim Führen des Blasgeräts über den Griffbereich.

Ein weiterer eigenständiger erfinderischer Gedanke betrifft ein Sauggerät mit einem Gebläse, das von einem Antriebsmotor angetrieben ist, mit einer Ansaugöffnung, an der ein Saugrohr festgelegt ist, wobei das Sauggerät mindestens einen Handgriff zum Führen des Sauggeräts besitzt, wobei das Sauggerät eine Mittelebene besitzt, die eine Längsmittelachse des mindestens einen Handgriffs enthält, wobei das Sauggerät mindestens einen Zusatzgriff besitzt.

Der weiteren Erfindung liegt die Aufgabe zugrunde, ein Sauggerät der gattungsgemäßen Art zu schaffen, das einen einfachen Aufbau besitzt und für Rechtshänder und Linkshänder eine ergonomische Bedienung ermöglicht.

Zur Lösung der Aufgabe ist vorgesehen, dass der Zusatzgriff an dem Sauggerät lösbar gehalten ist und dass das Sauggerät mindestens zwei Aufnahmen für den mindestens einen Zusatz griff besitzt. Die mindestens zwei Aufnahmen umfassen eine erste Aufnahme und eine zweite Aufnahme. Ist der Zusatzgriff in der ersten Aufnahme der beiden Aufnahmen montiert, so ragt er auf eine erste Seite einer Mittelebene des Sauggeräts. Ein in der zweiten der beiden Aufnahmen montierter Zusatzgriff ragt auf eine zweite, gegenüberliegende Seite der Mittelebene. Dadurch kann der Zusatzgriff wahlweise so angeordnet werden, dass er mit der linken Hand bequem gegriffen werden kann, wenn der Bediener den Handgriff zum Führen des Sauggeräts in der rechten Hand hält oder, in alternativer Konfiguration, so montiert werden, dass der Zusatzgriff mit der rechten Hand und der Handgriff zum Führen des Sauggeräts mit der linken Hand gegriffen werden kann. Dadurch ist ein ergonomischer Betrieb sowohl für Rechtshänder als auch für Linkshänder möglich.

Vorteilhaft trägt der Handgriff zum Führen des Sauggeräts mindestens ein Bedienelement zur Ansteuerung des Antriebsmotors. Der mindestens eine Zusatzgriff besitzt vorteilhaft kein Bedienelement, so dass der Zusatzgriff einfach vom Sauggerät demontiert werden kann. Der Antriebsmotor ist vorteilhaft in einem Gehäuse des Sauggeräts angeordnet. Die Mittelebene verläuft in üblicher Arbeitslage des Sauggeräts vorteilhaft etwa senkrecht. Das Sauggerät besitzt vorteilhaft eine Ausblasöffnung, durch die über das Saugrohr angesaugtes Gut abgefördert wird. Die Ausblasöffhung dient vorteilhaft zur Verbindung mit einer Sammeleinrichtung für Sauggut.

Eine einfache Gestaltung ergibt sich, wenn auf jeder Seite der Mittelebene eine Aufnahme für einen Zusatzgriff angeordnet ist. In bevorzugter Gestaltung sind die Aufnahmen symmetrisch bezogen auf die Mittelebene angeordnet. Der Zusatzgriff und die Aufnahme sind in vorteilhafter Gestaltung über eine Steckverbindung miteinander verbindbar. Dadurch ist der Zusatzgriff einfach an dem Sauggerät montierbar oder von diesem lösbar.

Um eine definierte Lage des Zusatzgriffs gegenüber dem Gehäuse des Sauggeräts zu erreichen, sind vorteilhaft Mittel zur Festlegung der Drehlage des Zusatzgriffs gegenüber der Aufnahme vorgesehen. Dies ist insbesondere dann vorteilhaft, wenn der Zusatzgriff nicht rotationssymmetrisch ausgebildet ist, sondern beispielsweise leicht gekrümmt verläuft. Dadurch lässt sich eine ergonomische Handhaltung am Zusatzgriff erreichen. Durch die Mittel zur Festlegung der Drehlage des Zusatzgriffs gegenüber der Aufnahme kann auf einfache Weise eine korrekte Montage des Zusatzgriffs in der Aufnahme und dadurch eine ergonomische Bedienung gewährleistet werden.

Es kann vorgesehen sein, dass das Sauggerät einen ersten Zusatzgriff zur Festlegung in der ersten Aufnahme und einen zweiten Zusatzgriff zur Anordnung in der zweiten Aufnahme besitzt. Dies ist insbesondere dann vorteilhaft, wenn die Zusatzgriffe auf beiden Seiten der Mittelebene nicht identisch ausgebildet sind. Die erste und die zweite Aufnahme können dabei unterschiedlich oder identisch ausgebildet sein. In bevorzugter Gestaltung ist ein Zusatzgriff zur wahlweisen Montage in der ersten Aufnahme oder der zweiten Aufnahme vorgesehen. Da im Betrieb entweder ein Zusatzgriff in der ersten Aufnahme oder ein Zusatzgriff in der zweiten Aufnahme benötigt wird, ist ein einziger Zusatzgriff zur wahlweisen Anordnung in beiden Aufnahmen ausreichend. Dadurch kann die Anzahl der Einzelteile des Sauggeräts reduziert werden. Der Zusatzgriff ist vorteilhaft näher an einer Eintrittsöffnung in das Saugrohr angeordnet als der Handgriff. Der in Richtung der Längsmittelachse des Saugrohrs gemessene Abstand des Zusatzgriffs zu einer Eintrittsöffnung in das Saugrohr des Sauggeräts ist bevorzugt kleiner als der in Richtung der Längsmittelachse des Saugrohrs gemessene Abstand des Handgriffs. In üblicher Arbeitshaltung ist die Hand des Bedieners, die das Sauggerät am Handgriff führt, dadurch weiter entfernt von der Eintrittsöffnung in das Saugrohr, also bezogen auf den Bediener weiter hinten angeordnet als die Hand, die das Sauggerät am Zusatz griff führt.

Das Sauggerät besitzt vorteilhaft eine Querebene, die die Längsmittelachse des Saugrohrs enthält und die senkrecht zur Mittelebene angeordnet ist. Der Zusatzgriff ist vorteilhaft in üblicher Arbeitshaltung im Saugbetrieb des Sauggeräts oberhalb der Querebene angeordnet. Der Handgriff ist vorteilhaft nahe der Querebene angeordnet. Vorteilhaft besitzt der Handgriff zur Querebene einen Abstand von weniger als 10 cm. In bevorzugter Gestaltung wird der Handgriff von der Querebene geschnitten. Die Hand des Bedieners, die das Sauggerät am Handgriff hält, ist dadurch im Betrieb weiter unten angeordnet als die Hand des Bedieners, die das Sauggerät am Zusatzgriff hält. Dadurch ergibt sich eine ergonomische Handhaltung.

Der Antriebsmotor ist vorteilhaft ein von einem Akku angetriebener Elektromotor. Der Ausdruck "Akku" wird dabei vorliegend als Oberbegriff für einzelne Akkuzellen und Akkublocks aus mehreren Akkuzellen verwendet. Der Akku ist vorteilhaft in üblicher Arbeitshaltung im Saugbetrieb mindestens teilweise oberhalb der Querebene angeordnet. Bevorzugt ist der Akku vollständig oberhalb der Querebene angeordnet. Dadurch ergeben sich ein kompakter Aufbau und eine ergonomische Gewichtsverteilung des Sauggeräts. Der Akku ist vorteilhaft in einem Akkuschacht lösbar gehalten. Dadurch kann der Akku einfach ausgetauscht werden. Der Akkuschacht ist zur Außenseite des Gehäuses hin vorteilhaft offen, so dass der Akku ohne Öffnen des Gehäuses ausgetauscht werden kann. Der Akkuschacht ist vorteilhaft in einem Gehäuseabschnitt des Gehäuses des Sauggeräts ausgebildet, an dem mindestens ein Fortsatz ausgebildet ist. An dem Fortsatz ist vorteilhaft die mindestens eine Aufnahme ausgebildet. Der Fortsatz ist vorteilhaft benachbart zu einer den Akkuschacht begrenzenden Wand des Gehäuses angeordnet und einteilig mit dieser ausgebildet.

Vorteilhaft ist der Akku in üblicher Arbeitshaltung im Saugbetrieb mindestens teilweise oberhalb des Antriebsmotors angeordnet.

Der Zusatzgriff besitzt eine Mittelachse, die mit der Mittelebene vorteilhaft einen Winkel von mindestens 30° einschließt. Vorteilhaft beträgt der Winkel, den der Zusatzgriff mit der Mittelebene einschließt, mindestens 60°, insbesondere mindestens 80°. Bei gebogenem Verlauf der Mittelachse des Zusatzgriffs ist der angegebene Winkel in mindestens einem Bereich, vorteilhaft in allen Bereichen des Zusatzgriffs realisiert.

In bevorzugter Gestaltung ist das Sauggerät ein Saug-/Blasgerät, das zum Einsatz im Blasbetrieb umbaubar ist.

Die Mittelebene enthält vorteilhaft die Längsmittelachse des Saugrohrs. In bevorzugter Gestaltung enthält die Mittelebene die Drehachse eines Gebläserades des Gebläses des Sauggeräts. In üblicher Arbeitslage des Sauggeräts verläuft die Mittelebene vorteilhaft etwa senkrecht.

Ein Ausführungsbeispiel der Erfindung wird im Folgenden anhand der Zeichnung erläutert. Es zeigen:
- Fig. 1: eine schematische Ansicht eines Blasgeräts im Blasmodus,
- Fig. 2: eine schematische Ansicht des Blasgeräts aus Fig. 1 im Saugmodus,
- Fig. 3: eine schematische Ansicht von oben auf einen Handgriff eines Blasgeräts nach Fig. 1,
- Fig. 4: das Blasgerät aus Fig. 1 mit demontiertem Blasrohr,
- Fig. 5: das Blasgerät aus Fig. 2 mit demontiertem Saugrohr,
- Fig. 6: eine Übersichtsdarstellung verschiedener Richtungsvektoren - beispielsweise der Orientierung der Längsachse des Handgriffs und der Ausblasrichtung - und der Winkel zwischen diesen Richtungsvektoren,
- Fig. 7: eine Ansicht eines Blasgeräts mit montiertem Saugrohr und Fangsack, bei dem der Handgriff sich in der zweiten Position befindet,
- Fig. 8: das Blasgerät nach Fig. 7 mit demontiertem Fangsack,
- Fig. 9: eine Seitenansicht eines Sauggeräts gemäß eines weiteren, eigenständigen erfinderischen Gedankens,
- Fig. 10: eine Draufsicht auf das Sauggerät aus Fig. 9 in Richtung des Pfeils X in Fig. 9,
- Fig. 11: einen vergrößerten Ausschnitt aus Fig. 9,
- Fig. 12: einen vergrößerten Ausschnitt aus Fig. 10,
- Fig. 13: eine Seitenansicht in Richtung des Pfeils XIII in Fig. 11, wobei die zweite Lage des Zusatzgriffs mit strichpunktierter Linie eingezeichnet ist,
- Fig. 14: eine Explosionsdarstellung des Sauggeräts aus Fig. 9 ohne an der Gebläsespirale angeordnete Anbauten, wobei zwei Zusatzgriffe zur wahlweisen Festlegung am Sauggerät gezeigt sind,
- Fig. 15: eine vergrößerte Darstellung des Sauggeräts entsprechend Fig. 9, wobei der Zusatzgriff in der gegenüberliegenden Aufnahme angeordnet ist,
- Fig. 16: eine Draufsicht auf das Sauggerät in der Konfiguration aus Fig. 15 in Richtung des Pfeils XVI in Fig. 15,
- Fig. 17: eine schematische Explosionsdarstellung des Sauggeräts aus Fig. 9, wobei alle vorgesehenen Anbauten für das Saug-/Blasgerät gezeigt sind,
- Fig. 18: eine Seitenansicht des Saug-/Blasgeräts aus Fig. 9 in einer Konfiguration für den Blasbetrieb und
- Fig. 19: eine Draufsicht auf das Saug-/Blasgerät in der Konfiguration für den Blasbetrieb in Richtung des Pfeils IXX in Fig. 18.

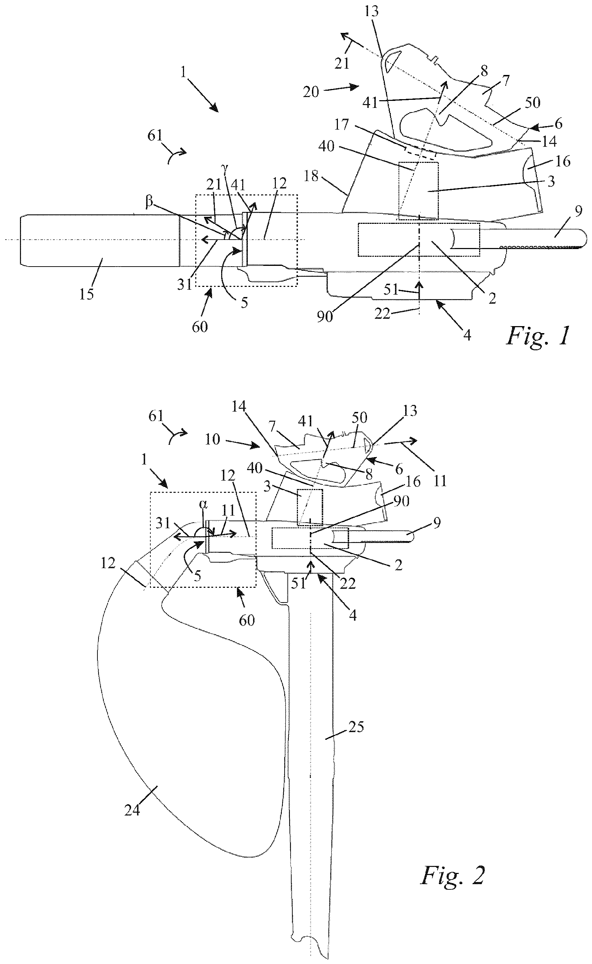

Fig. 1 zeigt in einer schematischen Seitenansicht ein Blasgerät 1 mit einem Gebläse 2. Das Blasgerät 1 kann sowohl in einem Saugmodus als auch in einem Blasmodus betrieben werden. Saugmodus und Blasmodus sind zwei verschiedene Arbeitsmodi des Blasgeräts 1. Das Gebläse 2 ist in einem Gehäuse 18 des Blasgeräts 1 angeordnet. Das Gebläse 2 ist über einen Antriebsmotor 3 angetrieben. Im Ausführungsbeispiel ist der Antriebsmotor 3 als Elektromotor ausgeführt. Der Elektromotor ist insbesondere von einem Akku 16 mit Energie versorgt. Der Elektromotor kann jedoch auch über eine elektrische Leitung mit Energie versorgt werden. Es kann jedoch auch vorgesehen sein, dass das Gebläse über einen Verbrennungsmotor, insbesondere über einen Zweitaktmotor oder einen gemischgeschmierten Viertaktmotor, angetrieben wird. Im Betrieb saugt das Gebläse 2 Luft über eine Ansaugöffnung 4 an und bläst sie über eine Ausblasöffhung 5 aus. Hierbei passiert ein Luftstrom 22 die Ansaugöffnung 4 in einer Ansaugrichtung. Ein Luftstrom 12 passiert die Ausblasöffnung 5 in einer Ausblasrichtung. In Fig. 1 wird das Blasgerät 1 im Blasmodus betrieben. Hierbei ist an der Ausblasöffhung 5 ein Blasrohr 15 angeordnet. Der Luftstrom 12 strömt an der Ausblasöffnung 5 in das Blasrohr 15.

In Fig. 2 ist das Blasgerät 1 im Saugmodus dargestellt. Wie in Fig. 2 dargestellt, kann beim Betrieb im Saugmodus an der Ausblasöffhung 5 statt des Blasrohrs 15 beispielsweise ein Fangsack 24 angeordnet sein. Im Saugmodus ist an der Ansaugöffnung 4 ein Saugrohr 25 angeordnet. Der Luftstrom 22 passiert das Saugrohr 25 und gelangt von dort durch die Ansaugöffnung 4 zum Gebläse 2. Der Luftstrom 22 verlässt das Gebläse 2 als Luftstrom 12 und strömt durch die Ausblasöffnung 5 in den Fangsack 24 ein. Mit dem vom Gebläse 2 erzeugten Luftstrom 22 können Objekte wie beispielsweise Blätter angesaugt werden. Es kann vorgesehen sein, dass das Gebläse 2 diese Objekte klein häckselt, so dass sie im Fangsack 24 in kompakter Form gesammelt werden können.

Das Blasgerät 1 umfasst einen Handgriff 6. Der Handgriff 6 ist am Gehäuse 18 gelagert. Der Handgriff 6 besitzt einen Griffbereich 7. Ein Bediener kann den Griffbereich 7 mit den Fingern seiner Hand umgreifen. Der Griffbereich kann beliebig geformt sein, beispielsweise auch gekrümmt. Jedoch weist der Griffbereich 7 in jedem Fall eine gedachte Längsachse 50 auf. Die Längsachse 50 erstreckt sich näherungsweise in Längsrichtung des Griffbereichs 7. Beim Betrieb des Blasgeräts 1 im Saugmodus befindet sich der Handgriff 6 typischerweise in einer ersten Position 10. In der ersten Position 10 des Handgriffs 6 ist die Längsachse 50 des Griffbereichs 7 in Richtung eines ersten Richtungsvektors 11 orientiert.

Der Handgriff 6 ist um eine Schwenkachse 40 schwenkbar am Blasgerät 1 gelagert. Hierzu ist ein in Fig. 1 schematisch dargestelltes Schwenklager 17 vorgesehen, das beispielsweise durch einen Stutzen am Handgriff 6 gebildet sein kann, der in einer Aufnahme des Gehäuses 18 des Blasgeräts 1 gelagert ist. Durch eine Schwenkbewegung um die Schwenkachse 40 kann der Handgriff 6 von der in Fig. 2 dargestellten ersten Position 10 in eine in Fig. 1 dargestellte zweite Position 20 geschwenkt werden. Der Handgriff 6 ist in der zweiten Position 20 im Vergleich zur ersten Position 10 um 180° um die Schwenkachse 40 verschwenkt. Beim Betrieb des Blasgeräts 1 im Blasmodus befindet sich der Handgriff 6 typischerweise in der zweiten Position 20. In der zweiten Position 20 ist die Längsachse 50 des Griffbereichs 7 des Handgriffs 6 in Richtung eines zweiten Richtungsvektors 21 orientiert. Der Luftstrom 12 passiert die Ausblasöffhung 5 in Richtung eines dritten Richtungsvektors 31. Die Ausblasrichtung zeigt in Richtung des dritten Richtungsvektors 31. Der erste Richtungsvektor 11 und der dritte Richtungsvektor 31 schließen einen in Fig. 2 dargestellten ersten Winkel α ein. Der Winkel α ist ausgehend vom an der Ausblasöffhung 5 angeordneten dritten Richtungsvektor 31 in Richtung 61 des Griffbereichs zum ersten Richtungsvektor 11 gemessen. Die Richtung 61 verläuft entlang des Umfangs eines Kreises, der in der Ebene 60 angeordnet ist und dessen Mittelpunkt im Zentrum der Ausblasöffhung 5 angeordnet ist. Der zweite Richtungsvektor 21 und der dritte Richtungsvektor 31 schließen einen in Fig. 1 gezeigten Winkel β ein. Der Winkel β ist ausgehend vom an der Ausblasöffnung 5 angeordneten dritten Richtungsvektor 31 in Richtung 61 des Griffbereichs zum zweiten Richtungsvektor 21 gemessen. Der Winkel α und der Winkel β sind unterschiedlich groß. Dadurch ist der Griffbereich 7 in der ersten Position 10 im Vergleich zur zweiten Position 20 unterschiedlich gegen die Ausblasrichtung geneigt.

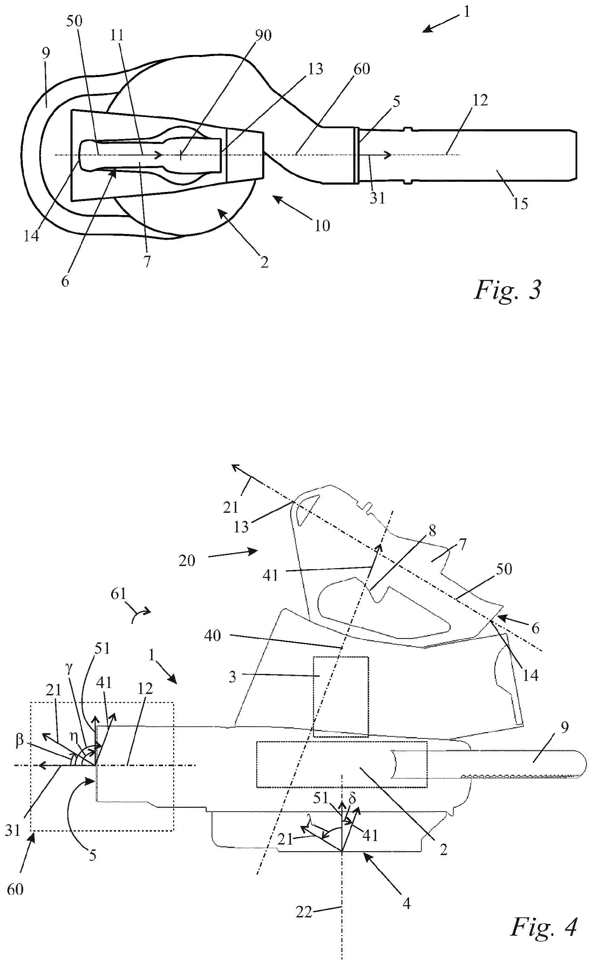

Fig. 3 zeigt eine Ansicht von oben mit Blickrichtung in Richtung einer Drehachse 90 des Gebläses 2. Der Handgriff 6 befindet sich in der ersten Position 10. Im Ausführungsbeispiel sind die Längsachse 50 und der Luftstrom 12 beim Passieren der Ausblasöffhung 5 in einer in den Figuren 1 bis 3 dargestellten Ebene 60 angeordnet. Es kann aber auch vorgesehen sein, dass der Luftstrom an der Ausblasöffhung 5 und die Längsachse 50 des Griffbereichs 7 in zwei verschiedenen Ebenen angeordnet sind. Vorteilhaft verlaufen die verschiedenen Ebenen parallel zueinander. Da der Luftstrom 12 an der Ausblasöffhung 5 und die Längsachse 50 des Griffbereichs 7 in der Ebene 60 angeordnet sind, befinden sich folglich auch der erste Richtungsvektor 11 und der dritte Richtungsvektor 31 in der Ebene 60. Die Ebene 60 ist von dem ersten Richtungsvektor 11 und dem dritten Richtungsvektor 31 aufgespannt. Wie in Fig. 1 dargestellt, befinden sich die Längsachse 50 des Griffbereichs 7 und der Luftstrom 12 an der Ausblasöffnung 5 auch in der zweiten Position des Handgriffs 6 in der gemeinsamen Ebene 60. Demnach befinden sich auch der zweite Richtungsvektor 21 und der dritte Richtungsvektor 31 in der gemeinsamen Ebene 60.

Die Schwenkachse 40 ist in Richtung eines vierten Richtungsvektors 41 orientiert. Der vierte Richtungsvektor 41 zeigt zumindest teilweise in Richtung von der Ausblasöffnung 5 zum Handgriff 6. Ein dritter Winkel γ zwischen dem dritten Richtungsvektor 31 und dem vierten Richtungsvektor 41 beträgt zwischen 90° und 180°. Vorteilhaft beträgt der dritte Winkel γ zwischen 100° und 135°. Im Ausführungsbeispiel beträgt der dritte Winkel γ zwischen 100° und 130°. Der dritte Winkel γ ist ausgehend von dem an der Ausblasöffnung 5 angeordneten dritten Richtungsvektor 31 in Richtung 61 des Griffbereichs 7 gemessen.

Wie in Fig. 1 dargestellt, besitzt der Handgriff 6 in Längsrichtung, also in Richtung der Längsachse 50, ein erstes Ende 13 und ein zweites Ende 14. Im Bereich des ersten Endes 13 ist ein Bedienelement 8 zur Bedienung des Antriebsmotors 3 angeordnet. In der zweiten Position 20 des Handgriffs 6 zeigt das erste Ende 13 des Handgriffs 6 zur Ausblasöffnung 4 hin. Wie in Fig. 2 dargestellt, zeigt das erste Ende 13 in der ersten Position 10 des Handgriffs 6 von der Ausblasöffnung 4 weg. Das Bedienelement 8 ist ortsfest am Handgriff 6 angeordnet. Das Bedienelement 8 verändert seine Position in Relation zum Handgriff 6 nicht. Bei einer Drehung des Handgriffs 6 dreht sich das Bedienelement 8 mit. Wie die Fig. 1 und 2 zeigen, schneidet die Schwenkachse 40 den Griffbereich 7 zwischen seinen Enden 13 und 14. Der Griffbereich 7 ist in der ersten Position 10 und in der zweiten Position 20 auf der der Ansaugöffnung 4 gegenüberliegenden Seite des Gehäuses 18 angeordnet.

Wie in Fig. 3 dargestellt, umfasst das Blasgerät 1 neben dem Handgriff 6 einen zweiten Handgriff 9. Der zweite Handgriff 9 und die Ausblasöffnung 5 sind auf gegenüberliegenden Seiten des Gebläses 2 angeordnet. Dadurch kann die Rückstoßkraft des aus dem Blasrohr 15 austretenden Luftstroms 12 vom Bediener sehr gut mittels des Handgriffs 9 aufgenommen werden. Der zweite Handgriff 9 ist im Wesentlichen U-förmig ausgebildet. Die beiden Enden des zweiten Handgriffs 9 sind auf gegenüberliegenden Seiten der Ebene 60 am Blasgerät 1 festgelegt. Auf diese Weise umgreift der Handgriff 9 das Gebläse 2.

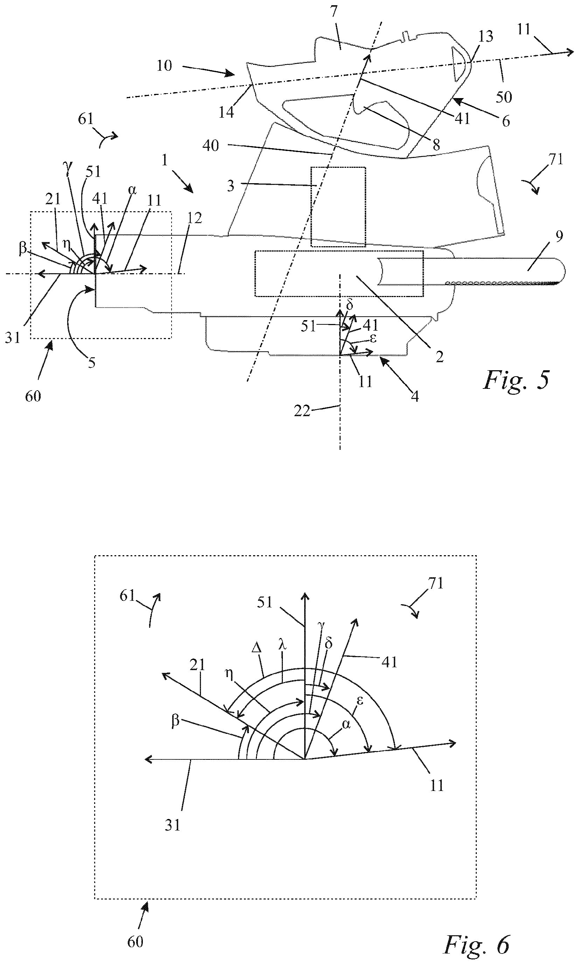

Die Fig. 4 und 5 zeigen vergrößerte Darstellungen des Blasgeräts 1 mit demontiertem Blasrohr, demontiertem Saugrohr und demontiertem Fangsack. Fig. 4 zeigt den Handgriff 6 in der zweiten Position 20, und Fig. 5 zeigt den Handgriff 6 in der ersten Position 10. Im Vergleich der Fig. 4 und 5 wird deutlich, dass der Griffbereich 7 in der ersten Position 10 zumindest teilweise von der Ausblasöffnung 5 weg geneigt ist und dass der Griffbereich 7 in der zweiten Position 20 zumindest teilweise in Richtung zur Ausblasöffnung 5 hin geneigt ist. Demnach ist der am Griffbereich 7 angeordnete erste Richtungsvektor 11 zumindest teilweise von der Ausblasöffnung 5 weg geneigt und der am Griffbereich 7 angeordnete zweite Richtungsvektor 21 zumindest teilweise in Richtung zur Ausblasöffnung 5 hin geneigt. Wenn der Griffbereich 7 von der Ausblasöffnung 5 weg geneigt ist, ist das erste Ende 13 des Handgriffs 6 weiter entfernt von der Ausblasöffnung 5 und weiter entfernt von der Ansaugöffnung 4 angeordnet als das zweite Ende 14 des Handgriffs 6. Wenn der Griffbereich 7 zu der Ausblasöffnung 5 hin geneigt ist, ist das das zweite Ende 14 des Handgriffs 6 weiter entfernt von der Ausblasöffnung 5 angeordnet als das erste Ende 14 des Handgriffs 6, und das erste Ende 13 ist weiter entfernt von der Ansaugöffnung 4 angeordnet als das zweite Ende 14 des Handgriffs 6.

Wie in Fig. 1 dargestellt, besitzt der Handgriff 6 in Längsrichtung, also in Richtung der Längsachse 50, ein erstes Ende 13 und ein zweites Ende 14. Im Bereich des ersten Endes 13 ist ein Bedienelement 8 zur Bedienung des Antriebsmotors 3 angeordnet. In der zweiten Position 20 des Handgriffs 6 zeigt das erste Ende 13 des Handgriffs 6 zur Ausblasöffnung 4 hin. Wie in Fig. 2 dargestellt, zeigt das erste Ende 13 in der ersten Position 10 des Handgriffs 6 von der Ausblasöffnung 4 weg.

Wie in Fig. 5 dargestellt, sind der erste Winkel a und der zweite Winkel β vom an der Ausblasöffnung 5 angeordneten dritten Richtungsvektor 31 ausgehend in Richtung 61 des Griffbereichs 7 gemessen. In Fig. 5 ist neben dem ersten Richtungsvektor 11, der die Richtung der Längsachse 50 des Griffbereichs 7 in der dem Saugmodus zugeordneten ersten Position 10 des Handgriffs 6 anzeigt, auch der zweite Richtungsvektor 21, der die Richtung der Längsachse 50 in der dem Blasmodus zugeordneten zweiten Position 20 des Griffbereichs des Handgriffs 6 zeigt, eingezeichnet. Der erste Winkel α ist größer als der zweite Winkel β. Der erste Winkel α beträgt zwischen 90° und 270°. Vorteilhaft beträgt der erste Winkel α zwischen 135° und 225°. Besonders vorteilhaft beträgt der erste Winkel α zwischen 170° und 220°. Im Ausführungsbeispiel ist der erste Winkel α größer als 170° und kleiner als 190°. Der zweite Winkel β beträgt zwischen 0° und 90° oder zwischen 270° und 360°. Vorteilhaft beträgt der zweite Winkel β zwischen 0° und 45° oder zwischen 315° und 360°. Im Ausführungsbeispiel beträgt der zweite Winkel β zwischen 20° und 40°.

Der Handgriff 6 kann durch eine Schwenkbewegung um die Schwenkachse 40 von der in Fig. 5 gezeigten ersten Position 10 in die in Fig. 4 gezeigte zweite Position 20 geschwenkt werden. Die Schwenkachse 40 steht schräg gegenüber der Richtung des Luftstroms 22 an der Ansaugöffhung 4. Der Luftstrom 22 passiert die Ansaugöffnung 4 in Richtung eines fünften Richtungsvektors 51. Ein vierter Winkel δ, der ausgehend von dem an der Ansaugöffhung 4 angeordneten fünften Richtungsvektor 51 zum vierten Richtungsvektor 41 in Richtung 71 weg von der Ausblasöffnung 5 gemessen ist, ist größer als 10°. Vorteilhaft ist der vierte Winkel δ kleiner als 90°. Im Ausführungsbeispiel ist der vierte Winkel δ kleiner als 30°.

In der ersten Position 10 ist die Längsachse 50 des Griffbereichs 7 des Handgriffs 6 ungefähr orthogonal zur Ansaugrichtung des Luftstroms 22 orientiert. Ein fünfter Winkel ε, der in der ersten Position 10 ausgehend vom an der Ansaugöffnung 4 angeordneten fünften Richtungsvektor 51 zum ersten Richtungsvektor 11 in Richtung 71 weg von der Ausblasöffnung 5 gemessen ist, beträgt von 80° bis 130°, insbesondere von 80° bis 100°. Die Richtung 71 erstreckt sich entlang eines Umfangs eines Kreises, dessen Mittelpunkt im Zentrum der Ansaugöffnung 4 angeordnet ist und der in der Ebene 60 verläuft.

Im Ausführungsbeispiel ist das Gebläse 2 ein Radialgebläse. Der Luftstrom 22 wird durch das Gebläse 2 von der Ansaugöffnung 4 zur Ausblasöffnung 5 in Summe um etwa 90° umgelenkt und verlässt das Gebläse 2 in Richtung des Luftstroms 12. Wie in Fig. 5 dargestellt, schließen der dritte Richtungsvektor 31 und der fünfte Richtungsvektor 51 einen sechsten Winkel η zwischen 80° und 100° ein. Der sechste Winkel η ist ausgehend vom an der Ausblasöffnung 5 angeordneten dritten Richtungsvektor 31 in Richtung 61 auf den Griffbereich 7 zu gemessen.

Fig. 6 zeigt eine Übersicht über die Orientierung der Richtungsvektoren 11, 21, 31, 41, 51 zueinander und die verschiedenen Winkel zwischen diesen Richtungsvektoren. Im Ausführungsbeispiel sind die den Richtungsvektoren 11, 21, 31, 41, 51 zuzuordnenden Ortsvektoren alle in derselben Eben 60 angeordnet. Es kann jedoch auch vorgesehen sein, dass die den Richtungsvektoren 11, 21, 31, 41, 51 zuzuordnenden Ortsvektoren in verschiedenen Ebenen angeordnet sind. In diesem Fall sind die jeweiligen Richtungsvektoren und die Winkel zwischen diesen Richtungsvektoren in einer einzigen Ebene zu vergleichen. Hierzu sind die Startpunkte aller Richtungsvektoren in einen einzigen Punkt zu legen. Die so angeordneten Richtungsvektoren spannen vorteilhaft eine gemeinsame Ebene auf.

Wie der Übersicht nach Fig. 6 zu entnehmen ist, ist eine Differenz Δ zwischen dem ersten Winkel α und dem zweiten Winkel β größer als 10°. Vorteilhaft ist die Differenz Δ größer als 25°. Besonders vorteilhaft ist die Differenz Δ größer als 90°. Im Ausführungsbeispiel ist die Differenz Δ größer als 125°. Weiterhin ist die Differenz Δ kleiner als 270°, insbesondere kleiner als 200°. Besonders vorteilhaft ist die Differenz Δ kleiner als 180°. Im Ausführungsbeispiel ist die Differenz Δ kleiner als 150°.

Ein siebter Winkel λ, der ausgehend vom an der Ansaugöffnung 4 angeordneten fünften Richtungsvektor 51 entgegen der Richtung 71 zum zweiten Richtungsvektor 21 hin gemessen ist, beträgt zwischen 0° und 90°. Vorteilhaft beträgt der Winkel λ zwischen 30° und 80°. Im Ausführungsbeispiel beträgt der Winkel λ zwischen 50° und 70°.

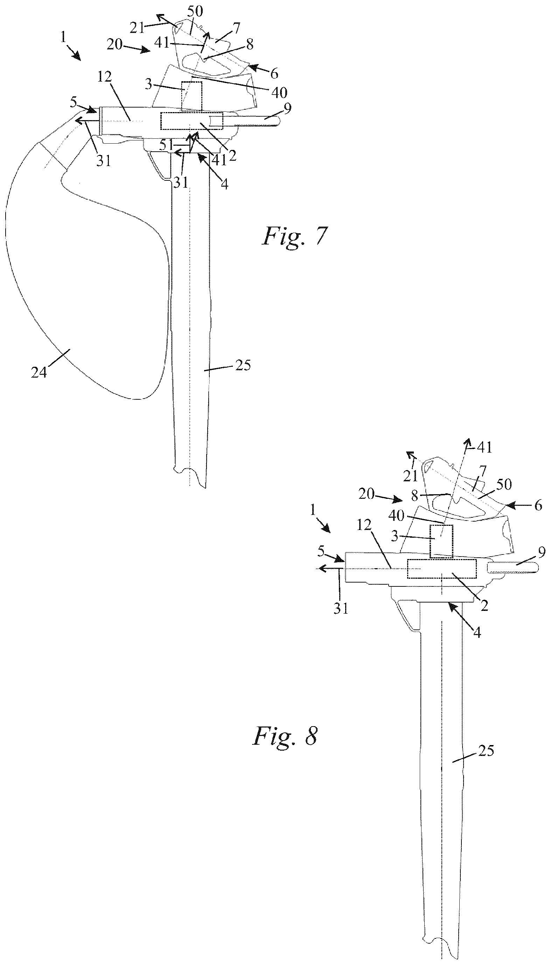

Ausgehend vom in Fig. 2 dargestellten Saugmodus kann das Blasgerät 1, wie im Folgenden beschrieben, für den in Fig. 1 dargestellten Blasmodus umgebaut werden. Zunächst wird der Handgriff 6 um die Schwenkachse 40 um 180° verschwenkt. Dann befindet sich der Handgriff 6 in seiner zweiten Position 20, wie in Fig. 7 dargestellt. Anschließend wird der Fangsack 24 von der Ausblasöffnung 5 entfernt. Dann befindet sich das Blasgerät 1 im in Fig. 8 dargestellten Zustand. Anschließend wird das Saugrohr 25 von der Ansaugöffnung 4 entfernt. Dann befindet sich das Blasgerät 1 im in Fig. 4 dargestellten Zustand. Abschließend wird das Blasrohr 15 auf die Ausblasöffnung 5 aufgesetzt, wie in Fig. 1 dargestellt. Nun kann das Blasgerät 1 im Blasmodus betrieben werden.

In den in Fig. 1 und Fig. 2 gegenübergestellten Zuständen des Blasgeräts 1 ist der Griffbereich 7 des Handgriffs 6 jeweils sehr gut für ein ergonomisches Tragen und Bedienen des Blasgeräts 1 durch einen Bediener im jeweiligen Arbeitsmodus orientiert. Im in Fig. 1 dargestellten Blasmodus kann der Bediener den Handgriff 6 von oben greifen und das Blasgerät 1 hängend tragen. Durch die leichte Schrägstellung der Längsachse 50 des Griffbereichs 7 gegenüber der Ausblasrichtung kann die Längsachse 50 im Betrieb horizontal ausgerichtet sein. So ist ein komfortables und ergonomisches Tragen des Blasgeräts 1 im Blasmodus möglich. Gleichzeitig zeigt die Ausblasrichtung bei horizontaler Orientierung der Längsachse 50 nach unten Richtung Boden. Dadurch können zu blasende Objekte ohne ein Kippen der Längsachse 50 des Griffbereichs 7 mit dem Blasrohr 15 anvisiert werden. In dem in Fig. 2 dargestellten Saugmodus greift der Bediener den Handgriff 6 derart, dass sein Unterarm und die in Richtung des fünften Richtungsvektors 51 zeigende Ansaugrichtung im Wesentlichen auf einer Linie liegen. Dadurch kann das Saugrohr 25 zielgenau auf einzusaugende Objekte gerichtet werden. Die im Betrieb des Gebläses 2 im Saugmodus entstehenden Kräfte können sehr gut vom Bediener aufgenommen werden.

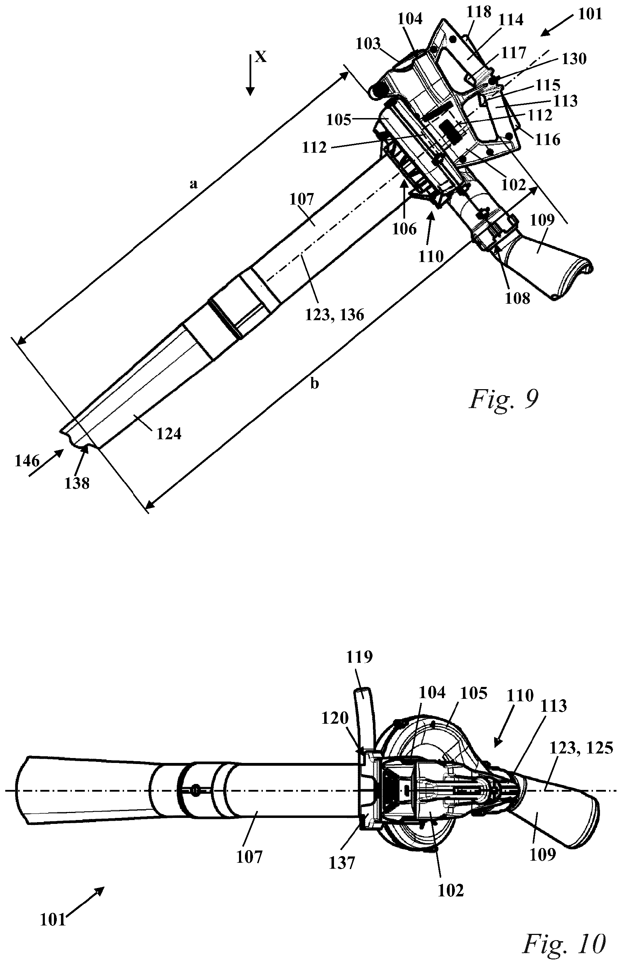

Fig. 9 zeigt als Ausführungsbeispiel des weiteren erfinderischen Gedankens ein Saug-/Blasgerät 101. Ein Saug-/Blasgerät ist ein Sauggerät, das durch Austausch von Anbauten in ein Blasgerät umbaubar ist. Das Saug-/Blasgerät 101 besitzt ein Gehäuse 102, an dem zwei Handgriffe 113, 114 zum Führen des Saug-/Blasgeräts 101 im Betrieb angeordnet sind. Fig. 9 zeigt das Saug-/Blasgerät in einer ersten Konfiguration 110 für den Saugbetrieb. In der ersten Konfiguration 110 ist das Saug-/Blasgerät 101 am ersten Handgriff 113 zu führen. Am ersten Handgriff 113 ist ein erstes Bedienelement 115 zur Ansteuerung eines im Gehäuse 102 angeordneten, in Fig. 9 schematisch gezeigten Antriebsmotors 112 angeordnet. Am ersten Handgriff 113 ist außerdem ein erstes Sperrelement 116 gelagert. Das erste Bedienelement 115 kann vorteilhaft nur dann betätigt werden, wenn das erste Sperrelement 116 gedrückt ist. Entsprechend sind am zweiten Handgriff 114 ein zweites Bedienelement 117 zur Ansteuerung des Antriebsmotors 112 im Blasbetrieb sowie ein zweites Sperrelement 118 vorgesehen, das in unbetätigtem, nicht gedrücktem Zustand das zweite Bedienelement 117 zur Ansteuerung des Antriebsmotors sperrt. Im Bereich zwischen den beiden Handgriffen 113 und 114 ist außerdem ein Sperrtaster 130 angeordnet, der von beiden Handgriffen 113, 114 aus betätigt werden kann.

Zur Versorgung des Antriebsmotors mit Energie ist im Gehäuse 102 ein Akku 103 angeordnet. Der Akku 103 ist in einem zur Gehäuseaußenseite hin offenen Akkuschacht 104 geführt, so dass der Akku 103 einfach ohne Öffnen des Gehäuses 102 ausgetauscht werden kann. Das Saug-/Blasgerät 101 besitzt eine Gebläsespirale 105, die mindestens teilweise einteilig mit dem Gehäuse 102 ausgebildet sein kann. Die Gebläsespirale 105 besitzt eine Ansaugöffnung 106 sowie eine Ausblasöffnung 108. An der Ansaugöffnung 106 ist ein Saugrohr 107 fixiert. Am Saugrohr 107 ist im Ausführungsbeispiel eine Saugdüse 124 angeordnet, die eine Eintrittsöffnung 138 besitzt. Durch die Eintrittsöffnung wird im Saugbetrieb Luft und anzusaugendes Gut in Richtung des Pfeils 146 in die Gebläsespirale 105 angesaugt. Die Gebläsespirale 105 besitzt eine Ausblasöffnung 108, durch die Sauggut und angesaugte Luft durch einen Fangsackstutzen 109 und einen nicht gezeigten, am Fangsackstutzen 109 anzuordnenden Fangsack ausgeblasen werden. Das Saugrohr 107 besitzt eine Längsmittelachse 123. In der Seitenansicht in Fig. 9 fällt die Längsmittelachse 123 mit einer Querebene 136 zusammen, die nachfolgend noch näher beschrieben wird. Die Querebene 136 erstreckt sich senkrecht zur Blattebene.

Wie Fig. 10 zeigt, liegt die Längsmittelachse 123 des Saugrohrs 107 in einer Mittelebene 125 des Saug-/Blasgeräts 101. Am Gehäuse 102, nämlich am Akkuschacht 104 ist ein Fortsatz 137 ausgebildet, an dem eine Aufnahme 120 für einen Zusatzgriff 119 ausgebildet ist. Die Fig. 9 und 10 zeigen das Saug-/Blasgerät in einer Konfiguration für einen Linkshänder. Der Bediener kann den Handgriff 113 mit der linken Hand greifen und den Zusatzgriff 119 mit seiner rechten Hand. Dadurch wird eine ergonomische Handhaltung erreicht.

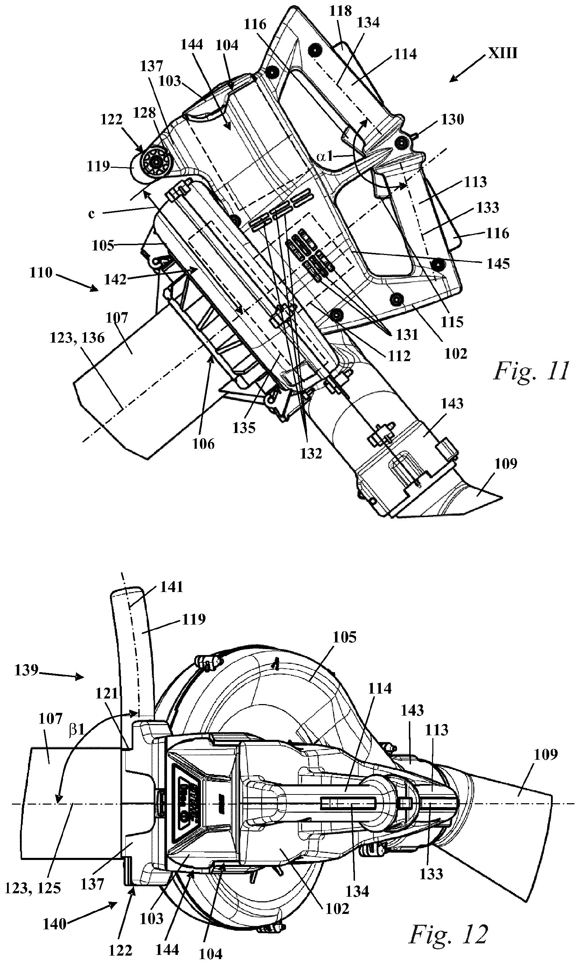

Fig. 11 zeigt die Gestaltung des Saug-/Blasgeräts im Einzelnen. Wie Fig. 11 schematisch zeigt, treibt der Antriebsmotor 112 ein Gebläse 142 an. Das Gebläse 142 umfasst ein in der Gebläsespirale 105 angeordnetes, rotierend angetriebenes Gebläserad 135. Das Gebläse 142 ist als Radialgebläse ausgebildet, das in axialer Richtung der Gebläsespirale 105 Luft und Sauggut wie Blätter oder dgl. ansaugt und in radialer Richtung oder Umfangsrichtung durch die Gebläsespirale 105 ausbläst. Im Ausführungsbeispiel ist das Gebläserad 135 um die Längsmittelachse 123 des Saugrohrs 107 rotierend angetrieben. Die Gebläsespirale 105 besitzt einen Ausblasstutzen 143, der in einem Abstand zur Längsmittelachse 123 angeordnet ist und durch den die angesaugte Luft und angesaugtes Sauggut die Gebläsespirale 105 in radialer Richtung zur Längsmittelachse 123 verlassen. Am Ausblasstutzen 143 ist der Fangsackstutzen 109 lösbar befestigt.

Wie Fig. 11 zeigt, ist der Akku 103 oberhalb der Querebene 136 angeordnet. Der Akkuschacht 104 ist in einem Gehäuseabschnitt 144 ausgebildet, der im Ausführungsbeispiel in üblicher Arbeitshaltung für den Saugbetrieb ebenfalls vollständig oberhalb der Querebene 136 angeordnet ist. Wie Fig. 11 auch zeigt, besitzt das Gehäuse 102 in einem Gehäuseabschnitt 145, in dem der Antriebsmotor 112 angeordnet ist, Kühlluftöffnungen 131. In einem Bereich zwischen den Gehäuseabschnitten 144 und 145 sind Kühlluftöffnungen 132 angeordnet.

Wie Fig. 11 auch zeigt, ist gegenüberliegend zum Zusatzgriff 119 eine Aufnahme 122 zur alternativen Anordnung des Zusatzgriffs 119 angeordnet. In die Aufnahme 122 ragt ein Steg 128, der zur Sicherung der Drehlage des Zusatzgriffs 119 in der Aufnahme 122 dient. Dadurch kann der Zusatzgriff 119 nur in einer konstruktiv vorgegebenen Orientierung in der Aufnahme 122 montiert werden. Wie Fig. 11 auch zeigt, besitzt der Zusatzgriff 119 zur Querebene 136 einen Abstand c. Der Zusatzgriff 119 ist dabei in der in Fig. 11 gezeigten üblichen Arbeitslage des Saug-/Blasgeräts 101 für den Saugbetrieb, also in der ersten Konfiguration 110, oberhalb der Querebene 136 angeordnet. Im Ausführungsbeispiel ist der Zusatzgriff 119 teilweise oberhalb der Gebläsespirale 105 angeordnet. Wie Fig. 12 zeigt, ist der Zusatzgriff 119 auch nach vorne versetzt zur Gebläsespirale 105 angeordnet, so dass ein Bediener bequem an der Oberseite der Gebläsespirale 105 vorbei zum Zusatzgriff 119 greifen kann.

Der erste Handgriff 113 besitzt eine Längsmittelachse 133, und der zweite Handgriff 114 besitzt eine Längsmittelachse 134. Die Längsmittelachsen 133 und 134 der beiden Handgriffe 113 und 114 schließen miteinander einen Winkel α1 ein. Der Winkel α1 beträgt vorteilhaft 90° bis 180°. Vorteilhaft beträgt der Winkel α1 120° bis 170°, insbesondere 140° bis 160°. Dadurch werden sowohl für den Saugbetrieb als auch für den Blasbetrieb ergonomische Handhaltungen erreicht. Der zweite Handgriff 114 ist vollständig oberhalb der Querebene 136 angeordnet. Der erste Handgriff 113 ist vorteilhaft in der Nähe der Querebene 136 angeordnet und besitzt zur Querebene insbesondere einen Abstand von weniger als 10 cm, insbesondere weniger als 5 cm. In bevorzugter Gestaltung ragt der erste Handgriff 113 durch die Querebene 136 und wird von der Querebene 136 geschnitten.

Fig. 12 zeigt die Lage der Mittelebene 125. Die Mittelebene 125 enthält die Längsmittelachse 123 des Saugrohrs 107 sowie die Längsmittelachse 133 des ersten Handgriffs 113. Im Ausführungsbeispiel liegt auch die Längsmittelachse 134 des zweiten Handgriffs 114 in der Mittelebene 125. Die Mittelebene 125 ist in üblicher Arbeitslage des Saug-/Blasgeräts 101 im Saugbetrieb senkrecht ausgerichtet. Die Mittelebene 125 enthält vorzugsweise die Drehachse des Gebläserades 135 des Gebläses 142. Im Ausführungsbeispiel fällt die Drehachse des Gebläserades 135 mit der Längsmittelachse 123 des Saugrohrs 107 zusammen.

Fig. 12 zeigt die Anordnung des Fortsatzes 137 am den Akkuschacht 104 bildenden Gehäuseabschnitt 144. Wie Fig. 12 zeigt, ist der Fortsatz 137 spiegelsymmetrisch zur Mittelebene 125 ausgebildet. Bevorzugt ist auch das Gehäuse 102 weitgehend spiegelsymmetrisch zur Mittelebene 125 ausgebildet. Der Zusatzgriff 119 ist in der in Fig. 12 gezeigten Anordnung für einen Linkshänder auf einer ersten, in üblicher Arbeitslage vom Bediener aus rechts zur Mittelebene 125 angeordneten Seite 139 der Mittelebene 125 angeordnet. Auf der gegenüberliegenden, linken Seite 140 der Mittelebene 125 ist kein Zusatzgriff 119 in der zugeordneten Aufnahme 122 angeordnet. Der Zusatzgriff 119 besitzt eine Mittelachse 141. Im Ausführungsbeispiel ist der Zusatzgriff 119 vom Fortsatz 137 ausgehend leicht nach vorne, also in Richtung auf das Saugrohr 107 gebogen. Die Mittelachse 141 besitzt dadurch einen geringfügig gekrümmten Verlauf. Auch ein gerader Verlauf der Mittelachse 141 kann vorteilhaft sein. Der Zusatzgriff 119 ist in einer Aufnahme 121 des Fortsatzes 137 gehalten, vorteilhaft über eine Steckverbindung. Die Mittelachse 141 des Zusatzgriffs 119 schließt mit der Mittelebene 125 einen Winkel β1 ein, der zumindest in dem an die Aufnahme 121 angrenzenden Bereich des Zusatzgriffs 119 mindestens 30° beträgt. Vorteilhaft beträgt der Winkel β1 in dem an die Aufnahme 121 angrenzenden Bereich des Zusatzgriffs 119 mindestens 60°, insbesondere mindestens 80°. In bevorzugter Gestaltung beträgt der Winkel β1 an jeder Stelle der Mittelachse 141 mindestens 30°, insbesondere mindestens 60°.

Wie Fig. 12 auch zeigt, wird der Ausblasstutzen 143 mittig von der Mittelebene 125 geschnitten. Der Fangsackstutzen 109 ragt auf die dem Zusatzgriff 119 abgewandte, linke Seite 140 der Mittelebene 125. Dadurch kann ein Bediener bequem auf der rechten Seite 139 der Mittelebene 125 stehen und das Saug-/Blasgerät 101 im Saugbetrieb führen.

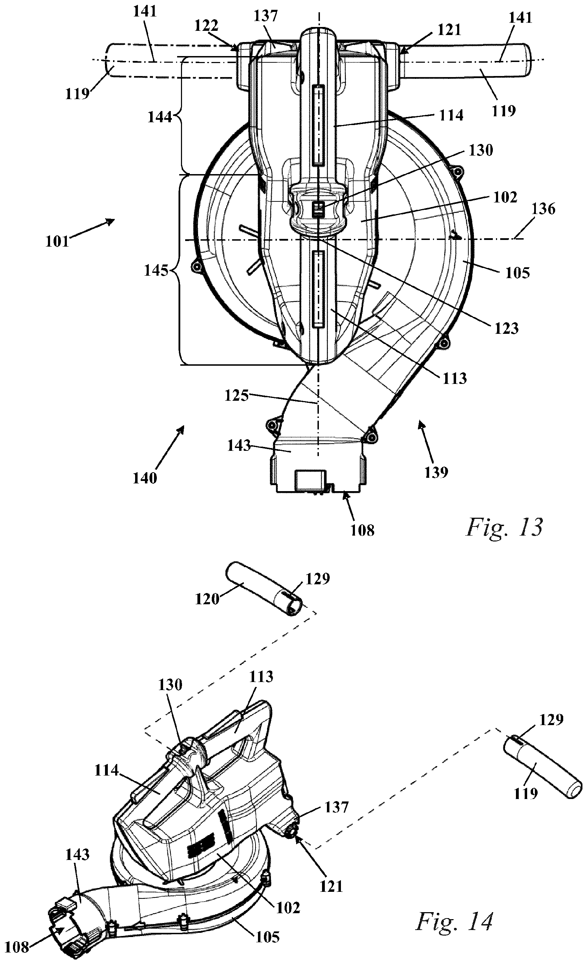

Fig. 13 zeigt eine Ansicht des Saug-/Blasgeräts 101 von der dem Saugrohr 107 abgewandten Seite in Richtung der Längsmittelachse 123 des Saugrohrs 107. Wie Fig. 13 zeigt, sind die Querebene 136 und die Mittelebene 125 senkrecht zueinander angeordnet. Sowohl die Mittelebene 125 als auch die Querebene 136 enthalten die Längsmittelachse 123 des in Fig. 13 nicht sichtbaren, hinter der Gebläsespirale 105 angeordneten Saugrohrs 107. Der Gehäuseabschnitt 144 ist vollständig oberhalb der Querebene 136 angeordnet. Der Gehäuseabschnitt 145 ragt durch die Querebene 136 und wird von der Querebene 136 geschnitten. Im Ausführungsbeispiel liegt auch der Sperrtaster 130 oberhalb der Querebene 136.

Wie Fig. 13 zeigt, sind am Fortsatz 137 beidseitig der Mittelebene 125 die Aufnahmen 121 und 122 angeordnet. In der Konfiguration für einen Linkshänder ist der mit durchgezogener Linie gezeichnete Zusatzgriff 119 in der Aufnahme 121 auf der rechten Seite 139 der Mittelebene 125 angeordnet. Soll das Saug-/Blasgerät von einem Rechtshänder bedient werden, so kann der Zusatz griff 119 aus der Aufnahme 121 gelöst und in der Aufnahme 122 auf der linken Seite 140 der Mittelebene 145 angeordnet werden. Diese Anordnung des Zusatzgriffs 119 ist in Fig. 13 mit strichpunktierter Linie gezeichnet. Bevorzugt ist ein einziger Zusatzgriff 119 zur wahlweisen Anordnung in der Aufnahme 121 oder der Aufnahme 122 vorgesehen. Die Anordnung des Zusatzgriffs 119 auf den beiden Seiten der Mittelebene 125 ist dabei spiegelsymmetrisch zur Mittelebene 125.

Fig. 14 zeigt eine Gestaltung, bei der ein zweiter Zusatzgriff 120 zur Anordnung in der Aufnahme 122 vorgesehen ist. Die Zusatzgriffe 119 und 120 können dabei identisch oder unterschiedlich ausgebildet sein. Wie Fig. 14 auch zeigt, besitzen die Zusatzgriffe 119, 120 einen Schlitz 129. Bei in der zugeordneten Aufnahme 121, 122 angeordnetem Zusatzgriff 119, 120 ragt der Steg 128 (Fig. 11) in den Schlitz 129 und sichert dadurch die Drehlage des Zusatzgriffs 119, 120. Wie die Fig. 11 und 14 auch zeigen, sind die Aufnahmen 121 und 122 als Vertiefungen ausgebildet, in die die Zusatzgriffe 119, 120 eingesteckt werden können. Die Zusatzgriffe 119, 120 sind demnach über eine Steckverbindung am Gehäuse 102 gehalten und können vom Gehäuse 102 leicht montiert und demontiert werden.

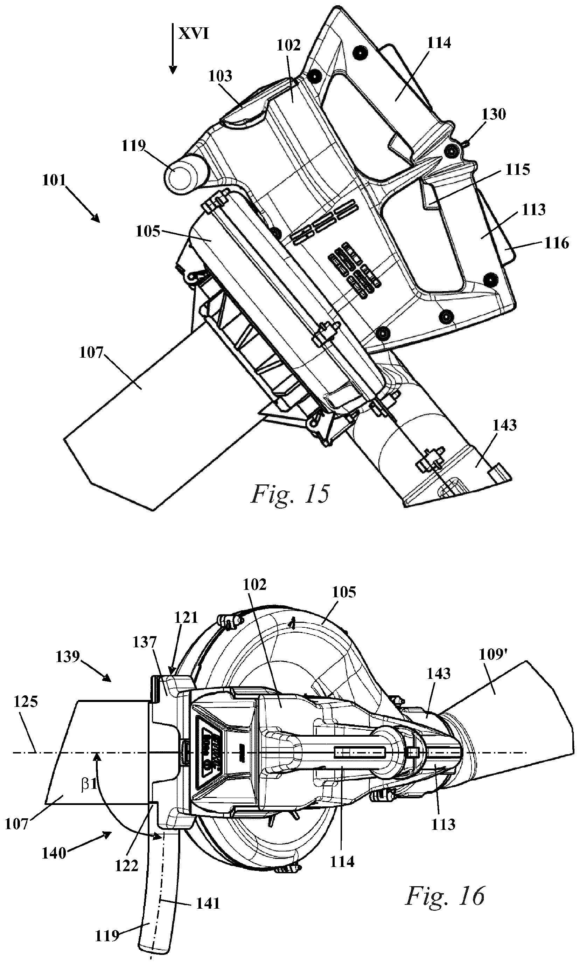

Die Fig. 15 und 16 zeigen das Saug-/Blasgerät 101 in der Konfiguration für einen Rechtshänder. Der Zusatzgriff 119 ist, wie die Fig. 15 und 16 zeigen, in der Aufnahme 122 auf der linken Seite 140 der Mittelebene 125 angeordnet. Auch bei dieser Anordnung schließt die Längsmittelachse 141 des Zusatzgriffs 119 mit der Mittelebene 125 einen Winkel β1 ein, der vorteilhaft mindestens 30° beträgt. Der Winkel β1 beträgt zumindest in dem an die Aufnahme 122 angrenzenden Bereich vorteilhaft mindestens 30°, insbesondere mindestens 60°, bevorzugt mindestens 80°. In vorteilhafter Gestaltung beträgt der Winkel β1 in jedem Bereich der Mittelachse 141 mindestens 30°, insbesondere mindestens 60°, bevorzugt mindestens 70°. Wie Fig. 16 auch zeigt, ist am Ausblasstutzen 143 ein Fangsackstutzen 109' angeordnet, der vom Ausblasstutzen 143 in Richtung auf die rechte Seite 139 der Mittelebenen 125 gerichtet ist. Dadurch ist bei der Konfiguration für einen Rechtshänder auf der linken Seite 140 der Mittelebene 125 ausreichend Platz für einen auf dieser Seite stehenden Bediener.

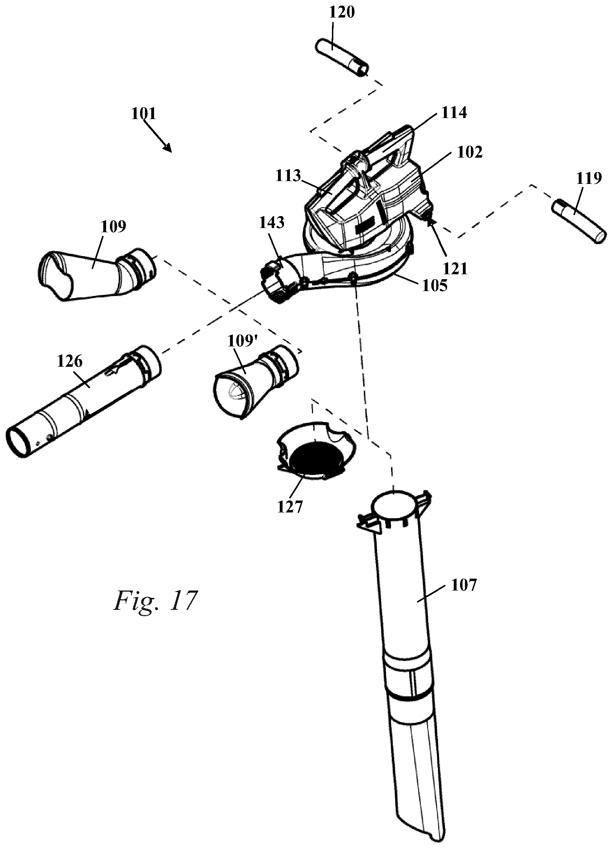

Das Saug-/Blasgerät 101 kann mit unterschiedlichen Anbauten versehen werden, die in Fig. 17 schematisch gezeigt sind. Am Gehäuse 102 kann ein Zusatzgriff 119 oder alternativ ein Zusatzgriff 120 angeordnet werden. Bevorzugt ist ein einziger Zusatzgriff 119 zur alternativen Anordnung in den Aufnahmen 121 und 122 (Fig. 16) vorgesehen.

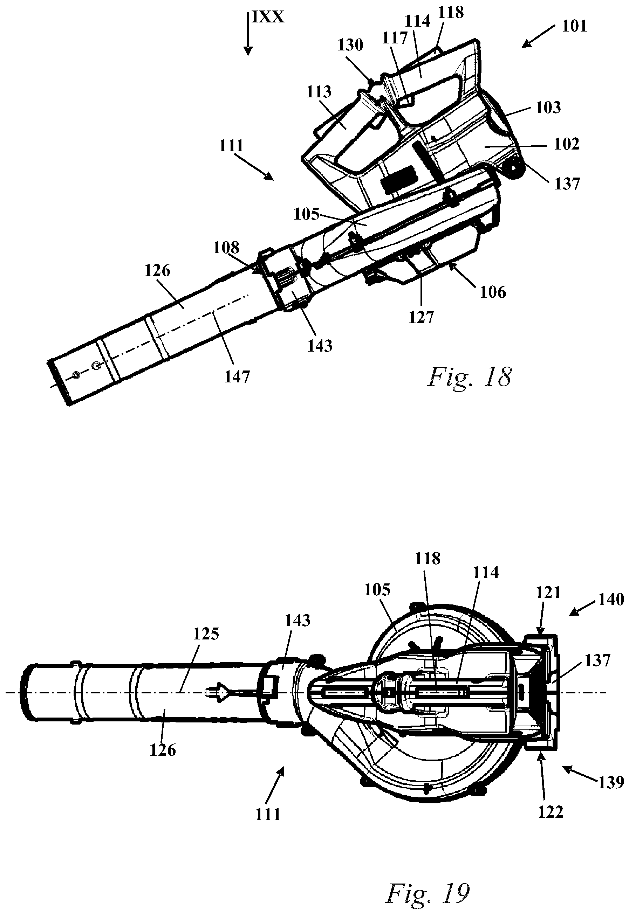

Am Ausblasstutzen 143 kann der Fangsackstutzen 109 oder alternativ der Fangsackstutzen 109' angeordnet werden. Die Fangsackstutzen 109 und 109' sind bevorzugt spiegelsymmetrisch zur Mittelebene 125 (Fig. 16) ausgebildet. In einer zweiten Konfiguration 111 (Fig. 18) für den Blasbetrieb kann am Ausblasstutzen 143 ein Blasrohr 126 angeordnet werden. An der in Fig. 17 nicht gezeigten Ansaugöffnung 106 (Fig. 9) kann das Saugrohr 107 für den Saugbetrieb oder alternativ, für den Blasbetrieb, ein Ansauggitter 127 angeordnet werden.

Die Fig. 18 und 19 zeigen das Saug-/Blasgerät 101 in einer zweiten Konfiguration 111 für den Blasbetrieb. In dieser Konfiguration ist am Ausblasstutzen 143 ein Blasrohr 126 angeordnet. Zusätzlich kann eine geeignete, nicht gezeigte Düse am Blasrohr 126 fixiert werden. Das Blasrohr 126 besitzt eine Längsmittelachse 147, die mit der Mittelebene 125 des Saug-/Blasgeräts 101 (Fig. 19) zusammenfällt. An der Ansaugöffhung 106 ist das Ansauggitter 127 angeordnet. Durch das Ansauggitter 127 wird Arbeitsluft vom Gebläse angesaugt und durch das Blasrohr 126 ausgeblasen.

In der zweiten Konfiguration 111 für den Blasbetrieb ist vorgesehen, dass der Bediener das Saug-/Blasgerät 101 am zweiten Handgriff 114 führt und über das zweite Bedienelement 117 bedient. Wie insbesondere Fig. 19 zeigt, sind für die zweite Konfiguration 111 für den Blasbetrieb keine Zusatzgriffe 119, 120 vorgesehen. In den Aufnahmen 121 und 122 ist jeweils kein Zusatzgriff 119, 120 angeordnet. Dadurch wird ein Bediener durch einen in einer Aufnahme 121, 122 angeordneten Zusatzgriff 119, 120 nicht gestört. Es kann auch vorgesehen sein, dass ein Zusatzgriff 119, 120 in der zugeordneten Aufnahme 121, 122 verbleibt. Ist der Bediener ein Rechtshänder, so steht er im Saugbetrieb auf der linken Seite 140 der Mittelebene 125, und der Zusatzgriff 119 ragt auf die linke Seite 140 der Mittelebene. Beim Blasbetrieb ist der Bediener dagegen auf der rechten Seite 139 des Saug-/Blasgeräts 101 angeordnet. Entsprechend ist ein linkshändiger Bediener im Saugbetrieb auf der rechten Seite 139 der Mittelebene 125 angeordnet, und der Zusatzgriff 119 ragt auf die rechte Seite 139 der Mittelebene, während der Bediener im Blasbetrieb auf der linken Seite 140 der Mittelebene 125 steht, so dass der Zusatzgriff 119 beim Blasbetrieb jeweils nicht stört.

## Patentansprüche

1. Blasgerät mit einem Gebläse (2), das von einem Antriebsmotor (3) angetrieben ist, mit einer Ansaugöffnung (4) und mit einer Ausblasöffnung (5), wobei das Blasgerät (1) einen Handgriff (6) zum Führen des Blasgeräts (1) besitzt, wobei der Handgriff (6) derart am Blasgerät (1) gelagert ist, dass er von einer ersten Position (10) in zumindest eine zweite Position (20) schwenkbar ist, wobei der Handgriff (6) einen Griffbereich (7) aufweist, wobei das Blasgerät (1) derart ausgelegt ist, dass im Betrieb des Blasgeräts (1) ein Luftstrom (12) die Ausblasöffnung (5) in eine Ausblasrichtung passiert,
**dadurch gekennzeichnet, dass** der Griffbereich (7) in der ersten Position (10) im Vergleich zur zweiten Position (20) unterschiedlich gegen die Ausblasrichtung geneigt ist.

2. Blasgerät nach Anspruch 1,
**dadurch gekennzeichnet, dass** der Griffbereich (7) eine gedachte Längsachse (50) aufweist, dass die Längsachse (50) in der ersten Position (10) in Richtung eines ersten Richtungsvektors (11) orientiert ist, dass die Längsachse (50) in der zweiten Position (20) in Richtung eines zweiten Richtungsvektors (21) orientiert ist, dass der Luftstrom (12) die Ausblasöffnung (5) in Richtung eines dritten Richtungsvektors (31) passiert, dass ein erster Winkel (α), der vom an der Ausblasöffnung (5) angeordneten dritten Richtungsvektor (31) ausgehend in Richtung (61) des Griffbereichs (7) zum ersten Richtungsvektor (11) gemessen ist, größer ist als ein zweiter Winkel (β), der vom an der Ausblasöffnung (5) angeordneten dritten Richtungsvektor (31) ausgehend in Richtung (61) des Griffbereichs (7) zum zweiten Richtungsvektor (21) gemessen ist.

3. Blasgerät nach Anspruch 2,
**dadurch gekennzeichnet, dass** die Differenz (Δ) zwischen dem ersten Winkel (α) und dem zweiten Winkel (β) größer als 10° ist.

4. Blasgerät nach Anspruch 2 oder 3,
**dadurch gekennzeichnet, dass** die Differenz (Δ) zwischen dem ersten Winkel (α) und dem zweiten Winkel (β) kleiner als 200° ist.

5. Blasgerät nach einem der Ansprüche 2 bis 4,
**dadurch gekennzeichnet, dass** der erste Winkel (α) größer als 170° und kleiner als 220° ist.

6. Blasgerät nach einem der Ansprüche 1 bis 5,
**dadurch gekennzeichnet, dass** der Griffbereich (7) in der ersten Position (10) zumindest teilweise von der Ausblasöffnung (5) weg geneigt ist, und in der zweiten Position (20) zumindest teilweise in Richtung zur Ausblasöffnung (5) hin geneigt ist.

7. Blasgerät nach einem der Ansprüche 1 bis 6,
**dadurch gekennzeichnet, dass** der Handgriff (6) um eine Schwenkachse (40) schwenkbar ist.

8. Blasgerät nach Anspruch 7,
**dadurch gekennzeichnet dass** der Handgriff (6) in der zweiten Position (20) im Vergleich zur ersten Position (10) um 180° um die Schwenkachse (40) verschwenkt ist.

9. Blasgerät nach Anspruch 7 oder 8,
**dadurch gekennzeichnet, dass** die Schwenkachse (40) in Richtung eines vierten Richtungsvektors (41) orientiert ist, wobei der vierte Richtungsvektor (41) zumindest teilweise in Richtung von der Ausblasöffnung (5) zum Handgriff (6) zeigt, und dass ein dritter Winkel (γ) zwischen dem dritten Richtungsvektor (31) und dem vierten Richtungsvektor (41) zwischen 90° und 180° beträgt, wobei der dritte Winkel (γ) ausgehend vom an der Ausblasöffnung (5) angeordneten dritten Richtungsvektor (31) in Richtung (61) des Griffbereichs (7) gemessen ist.

10. Blasgerät nach einem der Ansprüche 1 bis 9,
**dadurch gekennzeichnet, dass** das Blasgerät (1) wahlweise in einem Saugmodus oder in einem Blasmodus betreibbar ist, und dass für den Saugmodus die erste Position (10) des Handgriffs (6) vorgesehen ist, und dass für den Blasmodus die zweite Position (20) des Handgriffs (6) vorgesehen ist.

11. Blasgerät nach einem der Ansprüche 1 bis 10,
**dadurch gekennzeichnet, dass** der Handgriff (6) in Längsrichtung ein erstes Ende (13) und ein zweites Ende (14) besitzt, dass im Bereich des ersten Endes (13) ein Bedienelement (8) zur Bedienung des Antriebsmotors (3) angeordnet ist, dass das erste Ende (13) in der ersten Position (10) des Handgriffs (6) von der Ausblasöffnung (4) weg zeigt, und dass das erste Ende (13) in der zweiten Position (20) des Handgriffs (6) zur Ausblasöffnung (4) hin zeigt.

12. Blasgerät nach Anspruch 11,
**dadurch gekennzeichnet, dass** das Bedienelement (8) ortsfest an dem Handgriff (6) angeordnet ist.

13. Blasgerät nach einem der Ansprüche 1 bis 12,
**dadurch gekennzeichnet, dass** das Blasgerät (1) einen zweiten Handgriff (9) umfasst und dass die Ausblasöffnung (5) und der zweite Handgriff (9) auf gegenüberliegenden Seiten des Gebläses (2) angeordnet sind.

14. Blasgerät nach einem der Ansprüche 1 bis 13,
**dadurch gekennzeichnet, dass** das Gebläse (2) ein Radialgebläse ist.

15. Blasgerät nach Anspruch 14,
**dadurch gekennzeichnet, dass** im Betrieb des Blasgeräts (1) ein Luftstrom (22) die Ansaugöffnung (4) in Richtung eines fünften Richtungsvektors (51) passiert, und dass ein vierter Winkel (δ), der ausgehend vom an der Ansaugöffnung (4) angeordneten fünften Richtungsvektor (51) zum vierten Richtungsvektor (41) in Richtung (71) weg von der Ausblasöffnung (5) gemessen ist, größer als 10° ist.

16. Blasgerät nach Anspruch 14 oder 15,
**dadurch gekennzeichnet, dass** ein fünfter Winkel (ε), der in der ersten Position (10) ausgehend vom an der Ansaugöffnung (4) angeordneten fünften Richtungsvektor (51) zum ersten Richtungsvektor (11) in Richtung (71) weg von der Ausblasöffnung (5) gemessen ist, von 80° bis 130° beträgt.

## Claims

1. Blower with a fan (2) which is driven by a drive motor (3), with a suction orifice (4) and with an exhaust orifice (5), wherein the blower (1) has a handle (6) for guiding the blower (1), wherein the handle (6) is so mounted on the blower (1) that it may be pivoted from a first position (10) into at least one second position (20), wherein the handle (6) has a gripping area (7), wherein the blower (1) is so designed that in operation of the blower (1) an airflow (12) passes the exhaust orifice (5) in an exhaust direction,
**characterised in that** the gripping area (7) in the first position (10) is inclined differently to the exhaust direction as compared with the second position (20).

2. Blower according to claim 1,
**characterised in that** the gripping area (7) has an imaginary longitudinal axis (50), that the longitudinal axis (50) is oriented in the first position (10) in the direction of a first direction vector (11), that the longitudinal axis (50) in the second position (20) is oriented in the direction of a second direction vector (21), that the airflow (12) passes the exhaust orifice (5) in the direction of a third direction vector (31), that a first angle (α), which is measured from the third direction vector (31) located at the exhaust orifice (5), in the direction (61) of the gripping area (7), towards the first direction vector (11), is greater than a second angle (β) which is measured from the third direction vector (31) located at the exhaust orifice (5), in the direction (61) of the gripping area (7), towards the second direction vector (21).

3. Blower according to claim 2 ,
**characterised in that** the difference (Δ) between the first angle (α) and the second angle (β) is greater than 10°.

4. Blower according to claim 2 or 3,
**characterised in that** the difference (Δ) between the first angle (α) and the second angle (β) is less than 200°.

5. Blower according to claim 2 to 4,
**characterised in that** the first angle (α) is greater than 170° and less than 220°.

6. Blower according to any of claims 1 to 5,
**characterised in that** the gripping area (7) in the first position (10) is at least partly inclined away from the exhaust orifice (5), and in the second position (20) is inclined at least partly in the direction towards the exhaust orifice (5).

7. Blower according to any of claims 1 to 6,
**characterised in that** the handle (6) may be pivoted around a swivel axis (40).

8. Blower according to claim 7,
**characterised in that** the handle (6) in the second position (20), in comparison with the first position (10), is inclined by 180° around the swivel axis (40).

9. Blower according to claim 7 or 8,
**characterised in that** the swivel axis (40) is oriented in the direction of a fourth direction vector (41), wherein the fourth direction vector (41) points at least partly in the direction from the exhaust orifice (5) to the handle (6), and that a third angle (γ) between the third direction vector (31) and the fourth direction vector (41) lies between 90° and 180°, wherein the third angle (γ) is measured from the third direction vector (31) located at the exhaust orifice (5), in the direction (61) of the gripping area (7).

10. Blower according to any of claims 1 to 9,
**characterised in that** the blower (1) may be operated either in suction mode or in blowing mode, and that for suction mode the first position (10) of the handle (6) is provided, and that for blowing mode the second position (20) of the handle (6) is provided.

11. Blower according to any of claims 1 to 10,
**characterised in that** the handle (6) has a first end (13) and a second end (14) in the longitudinal direction, that in the area of the first end (13) there is provided a control element (8) for controlling the drive motor (3), that the first end (13) in the first position (10) of the handle (6) points away from the exhaust orifice (4) and that the first end (13) in the second position (20) of the handle (6) points towards the exhaust orifice (4).

12. Blower according to claim 11,
**characterised in that** the control element (8) is mounted immovably on the handle (6).

13. Blower according to any of claims 1 to 12,
**characterised in that** the blower (1) includes a second handle (9) and that the exhaust orifice (5) and the second handle (9) are arranged on opposite sides of the fan (2).

14. Blower according to any of claims 1 to 13,
**characterised in that** the fan (2) is a radial fan.

15. Blower according to claim 14,
**characterised in that**, in operation of the blower (1), an airflow (22) passes the suction orifice (4) in the direction of a fifth direction vector (51), and that a fourth angle (δ) which is measured from the fifth direction vector (51) located at the suction orifice (4), towards the fourth direction vector (41) in the direction (71) away from the exhaust orifice (5), is greater than 10°.

16. Blower according to claim 14 or 15,
**characterised in that** fifth angle (ε) which in the first position (10) is measured from the fifth direction vector (51) located at the suction orifice (4) towards the first direction vector (11) in the direction (71) away from the exhaust orifice (5), lies between 80° and 130°.

## Revendications

1. Souffleur comprenant une soufflante (2) qui est entraînée par un moteur d'entraînement (3), comprenant une ouverture d'aspiration (4) et comprenant une ouverture de soufflage (5), dans lequel le souffleur (1) possède une poignée (6) pour diriger le souffleur (1), dans lequel la poignée (6) est montée sur le souffleur (1) de telle sorte qu'elle soit apte à pivoter d'une première position (10) à au moins une deuxième position (20), dans lequel la poignée (6) présente une zone de préhension (7), dans lequel le souffleur (1) est conçu de telle sorte que lors du fonctionnement du souffleur (1), un courant d'air (12) passe l'ouverture de soufflage (5) dans une direction de soufflage,
**caractérisé en ce que** dans la première position (10), la zone de préhension (7) est inclinée par rapport à la direction de soufflage d'une manière différente comparativement à la deuxième position (20).

2. Souffleur selon la revendication 1,
**caractérisé en ce que** la zone de préhension (7) présente un axe longitudinal imaginaire (50), que dans la première position (10), l'axe longitudinal (50) est orienté dans la direction d'un premier vecteur de direction (11), que dans la deuxième position (20), l'axe longitudinal (50) est orienté dans la direction d'un deuxième vecteur de direction (21), que le courant d'air (12) passe l'ouverture de soufflage (5) dans la direction d'un troisième vecteur de direction (31), qu'un premier angle (α), qui est mesuré à partir du troisième vecteur de direction (31) disposé à l'ouverture de soufflage (5) dans la direction (61) de la zone de préhension (7) jusqu'au premier vecteur de direction (11), est supérieur à un deuxième angle (β), qui est mesuré à partir du troisième vecteur de direction (31) disposé à l'ouverture de soufflage (5) dans la direction (61) de la zone de préhension (7) jusqu'au deuxième vecteur de direction (21).

3. Souffleur selon la revendication 2,
**caractérisé en ce que** la différence (Δ) entre le premier angle (α) et le deuxième angle (β) est supérieure à 10°.

4. Souffleur selon la revendication 2 ou 3,
**caractérisé en ce que** la différence (Δ) entre le premier angle (α) et le deuxième angle (β) est inférieure à 200°.

5. Souffleur selon l'une des revendications 2 à 4,
**caractérisé en ce que** le premier angle (α) est supérieur à 170° et inférieur à 220°.

6. Souffleur selon l'une des revendications 1 à 5,
**caractérisé en ce que** dans la première position (10), la zone de préhension (7) est inclinée au moins partiellement à l'opposé de l'ouverture de soufflage (5) et, dans la deuxième position (20), est inclinée au moins partiellement en direction de l'ouverture de soufflage (5).

7. Souffleur selon l'une des revendications 1 à 6,
**caractérisé en ce que** la poignée (6) est apte à pivoter autour d'un axe de pivotement (40).

8. Souffleur selon la revendication 7,
**caractérisé en ce que** dans la deuxième position (20), la poignée (6) est pivotée de 180° autour de l'axe de pivotement (40) par rapport à la première position (10).

9. Souffleur selon la revendication 7 ou 8,
**caractérisé en ce que** l'axe de pivotement (40) est orienté dans la direction d'un quatrième vecteur de direction (41), dans lequel le quatrième vecteur de direction (41) est dirigé au moins partiellement dans la direction de l'ouverture de soufflage (5) vers la poignée (6), et qu'un troisième angle (γ) entre le troisième vecteur de direction (31) et le quatrième vecteur de direction (41) s'élève entre 90° et 180°, dans lequel le troisième angle (γ) est mesuré à partir du troisième vecteur de direction (31) disposé à l'ouverture de soufflage (5) dans la direction (61) de la zone de préhension (7).

10. Souffleur selon l'une des revendications 1 à 9,
**caractérisé en ce que** le souffleur (1) est apte à fonctionner sélectivement dans un mode aspiration ou dans un mode soufflage, et que la première position (10) de la poignée (6) est prévue pour le mode aspiration, et que la deuxième position (20) de la poignée (6) est prévue pour le mode de soufflage.

11. Souffleur selon l'une des revendications 1 à 10,
**caractérisé en ce que** dans la direction longitudinale, la poignée (6) possède une première extrémité (13) et une deuxième extrémité (14), qu'un élément de commande (8) est disposé dans la zone de la première extrémité (13) pour commander le moteur d'entraînement (3), que dans la première position (10) de la poignée (6), la première extrémité (13) est dirigée à l'opposé de l'ouverture de soufflage (4), et que dans la deuxième position (20) de la poignée (6), la première extrémité (13) est dirigée vers l'ouverture de soufflage (4).

12. Souffleur selon la revendication 11,
**caractérisé en ce que** l'élément de commande (8) est disposé de manière fixe sur la poignée (6).

13. Souffleur selon l'une des revendications 1 à 12,
**caractérisé en ce que** le souffleur (1) comprend une deuxième poignée (9) et que l'ouverture de soufflage (5) et la deuxième poignée (9) sont disposées sur des côtés opposés de la soufflante (2).

14. Souffleur selon l'une des revendications 1 à 13,
**caractérisé en ce que** la soufflante (2) est une soufflante radiale.

15. Souffleur selon la revendication 14,
**caractérisé en ce que** lors du fonctionnement du souffleur (1), un courant d'air (22) passe l'ouverture d'aspiration (4) dans la direction d'un cinquième vecteur de direction disposé à l'ouverture d'aspiration (4), et qu'un quatrième angle (δ), qui est mesuré à partir du cinquième vecteur de direction (51) disposé à l'ouverture d'aspiration (4) jusqu'au quatrième vecteur de direction (41) à l'opposé de l'ouverture de soufflage (5), est supérieur à 10°.

16. Souffleur selon la revendication 14 ou 15,
**caractérisé en ce qu'**un cinquième angle (ε), qui est mesuré dans la première position (10) à partir du cinquième vecteur de direction (51) disposé à l'ouverture d'aspiration (4) jusqu'au premier vecteur de direction (11) dans la direction (71) à l'opposé de l'ouverture de soufflage (5), s'élève de 80° à 130°.
